# EUROPÄISCHE PATENTANMELDUNG

(11) **EP 0 862 945 A2**
(43) Veröffentlichungstag der Anmeldung: **09.09.1998**
(21) Anmeldenummer: 98250077.9
(22) Anmeldetag: 03.03.1998
(51) Int. Cl.: B01J 8/00, B01J 8/08, B01J 8/12, B01J 19/18

(54) **Apparat für kontinuierlich oder diskontinuierlich ablaufende Stoff- und/oder Wärmeübergangsprozesse**

(30) Priorität: 04.03.1997 DE 19711044
(71) Anmelder: Schulz Verfahrenstechnik Gmbh, 16230 Britz (DE)
(72) Erfinder: Schulz, Reinhardt, 16230 Britz (DE); Müller, Lothar, 39517 Weissewarte (DE); Brandauer, Edgar, 06126 Halle (DE)
(74) Vertreter: Hengelhaupt, Jürgen, Dipl.-Ing.

(57) **Zusammenfassung**

Gegenstand der Erfindung ist ein Apparat für kontinuierlich oder diskontinuierlich ablaufende Stoff- und/oder Wärmeübergangsprozesse, insbesondere zur thermischen und/oder stofflichen Behandlung von Abfallstoffen, bspw. Klärschlämmen, zwecks Schließung vorhandener Stoffkreisläufe.

Die Vorteile einer hohen Kompaktheit und Flexibilität werden erreicht durch ein im wesentlichen vertikales mehrstufiges Reaktionsgefäß mit mehreren durch bodenartige Einbauten voneinander getrennten Sektionen zur fortschreitenden Behandlung des Einsatzgutes mit einem fluiden Behandlungsmedium, wobei das Behandlungsgut in eine Aufgabesektion (2) am Anlagenkopf aufgegeben wird und unter Einwirkung der Schwerkraft die Behandlungszonen im Gegen-, Gleich- oder Querstrom zu dem Behandlungsmedium durchläuft, umfassend
- eine erste Behandlungssektion (12) mit einer Eintritts- und/oder Austrittsöffnung (13) für das fluide Behandlungsmedium und einem gasdurchlässigen, im wesentlichen horizontalen Boden (14),
- eine zweite Behandlungssektion (17) mit Eintrittsöffnungen (18) im Gehäusemantel (1) zum Zuführen eines Teilstroms oder des Gesamtstroms des fluiden Behandlungsmediums,
- eine dritte Behandlungssektion (19) mit einem gasdurchlässigen Anströmboden (20) zur gleichmäßigen Verteilung eines Teilstroms oder des Gesamtstroms des fluiden Behandlungsmediums über den gesamten Apparateinnenquerschnitt und einer gasdichten Feststoffaustrageinrichtung (21) für das behandelte Gut am Apparateboden.

## Beschreibung

Gegenstand der Erfindung ist ein Apparat für kontinuierlich oder diskontinuierlich ablaufende Stoffund/oder Wärmeübergangsprozesse, insbesondere zur thermischen und/oder stofflichen Behandlung von pastösen, körnigen, stückigen oder faserigen Abfall- oder Reststoffen zwecks Schließung vorhandener Stoffkreisläufe.

Nach dem Kreislauf-Wirtschaftsgesetz sollen durch thermische und stoffliche Verwertung von Abfallstoffen vorhandene Stoffkreisläufe geschlossen und so das Aufkommen von Abfallstoffen vermindert werden.

Die Umsetzung des Kreislauf-Wirtschaftsgesetzes stellt nicht zuletzt die Betreiber von Abwasserreinigungsanlagen vor zunehmende Entsorgungsprobleme.
Von den derzeit in Deutschland in kommunalen und industriellen Anlagen anfallenden Klärschlämmen werden ca. 30% im Land- und Landschaftsbau durch Kompostierung oder Flächenaufbringung verwertet, ca. 55% auf die Deponie verbracht und ca. 15% verbrannt.
Je nach ihrer Herkunft aus kommunalem oder industriellem Abwasser unterscheiden sich die Schlämme in Zusammensetzung und Schwermetallbelastung. Der Gehalt an anorganischen und organischen Schadstoffen, wie Schwermetallen, organischen Halogenverbindungen, organischen persistenten Substanzen, an den Nährstoffen Stickstoff, Phosphor, Kalium, Magnesium, an basisch wirksamen Stoffen, der pH-Wert und der Trockenrückstand bestimmen die Qualität eines Klärschlamms.

Insbesondere der Gehalt an Schwermetallen und organischen Schadstoffen begrenzen den Einsatz in der Land-und Forstwirtschaft. So verbietet die Klärschlammverordnung das Aufbringen auf Grünland, Futteranbauflächen und forstwirtschaftlich genutzte Flächen.

Die Verbringung von Klärschlamm auf eine Deponie fällt in den Anwendungsbereich der TA Siedlungsabfall. Dort wird als eine Voraussetzung für die Deponierung eine Flügelscherfestigkeit des Deponiegutes von >25 kN/m² gefordert, die bei Klärschlamm in der Regel erst ab Trockensubstanzgehalten von 40-50 Ma% erreicht wird. Da durch maschinelles Entwässern des auf Kläranlagen anfallenden Klärschlammes diese Werte kaum erreicht werden, erfolgt in der Regel ein Zumischen fremder Trokkensubstanzen, wie Kalk oder Asche. Dies erhöht die zu entsorgende Abfallmenge und damit den Aufwand an Transport- und Deponiekosten. Zudem verbietet die 1993 vom Gesetzgeber verabschiedete TA-Siedlungsabfall eine Deponierung von Stoffen, die mehr als 5% organische Substanz (gemessen als Glühverlust) in der Trockensubstanz enthalten, ab dem Jahr 2005. Darunter fällt insbesondere der Klärschlamm.

Dies alles führt dazu, daß die Möglichkeit der Entsorgung von Klärschlamm durch landwirtschaftliche Verwertung oder Deponierung rückläufig ist und zunehmend nach praktikablen Lösungen zum Behandeln von Klärschlämmen gesucht wird.

Ein bekanntes Behandlungsverfahren ist die Verbrennung des Klärschlamms. Als Verbrennungsprodukt fällt dabei eine Asche an, die entweder ohne Probleme auf die Deponie verbracht werden oder in anderer Weise verwertet werden kann, bspw. als Füllstoff im Tief- oder Straßenbau.

Die Vorteile einer Verbrennung von Klärschlamm liegen neben der CO₂-neutralen Energieerzeugung insbesondere auch in der wesentlich geringeren Masse des festen Restproduktes, der Asche, was eine erhebliche Verringerung des Transportaufwandes und der Deponiebelastung sowie der dafür erforderlichen Kosten zur Folge hat. Darüber hinaus werden Schadstoffe durch die Verbrennung entweder zerstört oder in der Asche gebunden. Kosten und Entsorgungssituation bleiben langfristig kalkulierbar. Verbrennungsasche genügt den Zuordnungskriterien der TA Siedlungsabfall.

Die thermische Behandlung durch Verbrennung kann entweder in eigens zu diesem Zweck erstellten Verbrennungsanlagen oder durch Beschickungszusatz (Mitverbren-nung) in Kraftwerks- oder Müllverbrennungsanlagen erfolgen.

Die Mitverbrennung von Klärschlamm in Müllverbrennungsanlagen wird in mehreren Anlagen praktiziert. Sie erfolgt bei Temperaturen zwischen 800°C und 1000°C. Eine wichtige Voraussetzung für eine zuverlässige Verbrennung ist die gleichmäßige Einbringung in den Verbrennungsraum (Bever,J. "Perspektiven der Klärschlamment- sorgung", R.Oldenbourg Verlag München Wien 1994). Bis zu Masseanteilen von 10% ist die Zumengung nicht vorbehandelten Klärschlamms möglich. Höhere Mengenanteile bedürfen einer Vortrocknung.

Dieses Verfahren hat den Nachteil eines hohen Transportaufwandes, da der Schlamm erst von der Abwasserreinigungsanlage zur Müllverbrennungsanlage transportiert werden muß. Auch setzt die Anlagenkonzeption dem Beimengungs-anteil Grenzen.

Die Entsorgung von Klärschlamm in einer Dampferzeugungsanlage durch Beimengung zum aufgegebenen Brennstoff weist die vorgenannten Nachteile ebenfalls auf. Darüber hinaus bergen wechselnde Schlammqualitäten die Gefahr der Uberschreitung des Ascheschmelzpunktes und damit einhergehender Verschlackungen in sich.

Der Betrieb separater Schlammverbrennungsanlagen bringt im Vergleich zu den vorgenannten Entsorgungsmöglichkeiten einen Standortvorteil, indem diese Anlagen dort errichtet werden, wo der Schlamm anfällt, nämlich in der Nähe entsprechender Aufbereitungsanlagen. Auch kann durch die Ausrichtung des gesamten Anlagenkonzepts auf nur einen Ausgangsstoff eine optimale Verfahrenstechnik eingerichtet werden.

In der Literatur ist die Verbrennung von Klärschlamm in Wirbelschichtöfen, in Etagenöfen, in Etagenwirblern und in Drehrohröfen beschrieben (z.B.: Römer,R. "Klärschlammverbrennung - Erfahrungen und Randbedingungen", ATV-Seminar Thermische Klärschlammbehandlung, 1992).

Verbrennungsverfahren in der Wirbelschicht zeichnen sich durch verhältnismäßig niedrige Brennraumtemperaturen aus, was die Bildung von Stickoxiden hemmt und die Gefahr von Verschlackungen gering hält. Die Temperaturen in der Wirbelschicht aus Sand und/oder Asche liegen zwischen 850°C und 900°C. Der Klärschlamm wird über Lanzen oder Wurfbeschicker entweder in das Wirbelbett oder über den Ofenkopf eingetragen.

Etagenöfen sind Öfen mit in mehreren Stockwerken angeordneten Tellerböden. Sie werden von oben mit dem Klärschlamm beschickt. Der Schlamm wird über die einzelnen Böden von oben nach unten durch den Ofen gefördert und erfährt dabei eine Vorwärmung, Trocknung, Verbrennung und Abkühlung. Verbrennungsluft und Rauch-gase durchstreichen im Gegenstrom von unten nach oben den Ofen. Uber gekühlte Schnecken wird die Asche unten abgezogen.

Der Etagenwirbelschichtofen stellt eine Kombination aus den zuvor beschrieben Wirbelschicht- und Etagenöfen dar und zeichnet sich durch eine kompakte Bauweise aus. Durch eine integrierte Vortrocknung im aufgesetzten Etagenteil kann die Baugröße gegenüber einem Wirbelschichtofen ohne Vortrocknung vermindert werden.

Die universellen Drehrohröfen werden zur Verbrennung stückiger, pastöser, schlammartiger und flüssiger organischer und anorganischer Abfallstoffe eingesetzt. Ein geneigter, mit feuerfestem Material ausgekleideter Zylinder dreht sich um seine Längsachse und wälzt dabei seinen Inhalt um und lockert ihn auf. Das Ofengut trocknet, schwelt, vergast und brennt schließlich aus. Die Vebrennungsluft kann je nach Einsatzgut im Gleich-oder Gegenstrom zum Gut gefördert werden.

Ein Nachteil dieser Ofengattung ist der hohe mechanische und chemische Angriff auf den Innenmantel. Schlackenansätze können sich ebenfalls bilden.

Eine im praktischen Betrieb bewährte Klärschlammentwässerungs- und Verbrennungsanlage auf Basis eines Etagenwirbelschichtofens beschreibt Hanitsch, P. "Klärschlammverbrennung im Etagenwirbler", ATV-Seminar Thermische Klärschlammbehandlung, 1992.

Aus einem Vorlagebehälter wird Frischschlamm mit 2,3 Ma% TS auf ca. 50°C vorgewärmt und einem Zentrifugalabscheider zugeführt. Der entwässerte Schlamm verläßt den Abscheider mit einem Trockensubstanzgehalt von 28 - 30 Ma% und wird in die obere Etage des Etagenwirblers eingeleitet. Der Dickschlamm durchwandert im Gegenstrom zu den Rauchgasen die Vortrocknungsetagen und wird auf etwa die Hälfte seines Eingangswassergehaltes getrocknet. Uber die unterste Etage, die gleichzeitig als Verteiler dient, wird das nunmehr krümelige Material in die Verbrennungsstufe eingebracht. Ein Kreiselgebläse sorgt dafür, daß die wasserdampf- und geruchsbeladenen Rauch-gase vom Ofenkopf zur Nachverbrennung in die Wirbelschicht zurückgeführt werden. Die Regelung der Ofentemperatur kann durch Variation der Verbrennungslufttemperatur, der Schlammaufgabe oder durch Wassereindüsung erfolgen. Bei Temperaturen zwischen 850°C und 900°C verläuft die Verbrennung selbstgängig und energieautark. Die aschebeladenen Rauchgase werden abgezogen und geben in einem nachgeschalteten Abhitzekessel ihre fühlbare Wärme an die Verbrennungsluft ab. Ein trocken betriebener Zweikammerelektrofilter besorgt die Feinentstaubung der auf 240°C abgekühlten Rauchgase. In einem anschließenden zweistufigen Radialstromwäscher, der mit Waschwasser aus dem Kläranlagenablauf im Durchlaufbetrieb arbeitet, werden Reststaub und auswaschbare Schwermetalle entfernt. Durch die weitere Abkühlung auf 55°C bis 60°C kondensiert ein großer Teil des im Rauchgas enthaltenen Wasserdampfes. Durch die anspruchsvollen Grenzwerte der 17. BImSchV bedarf es in der Regel einer weiteren Rauchgasreinigung. Nach Austritt aus dem Wäscher werden die gereinigten Rauchgase durch Zumischen vorgeheizter Luft auf 105 °C erwärmt und über den Schornstein in die Atmosphäre entlassen.

Errichtung und Betrieb einer derartigen Anlage bedürfen eines sehr hohen Investitionsaufwands. Die gesonderte Rauchgaswäsche und Entstaubung bedingen eine aufwendige Anlagenperipherie mit hohem Platzbedarf. Hinzu kommen die hochgradig schadstoffhaltigen Rückstände aus der Wäsche und dem Staubfilter, die gesondert entsorgt werden müssen. Die Folge sind hohe Betriebs- und Personalkosten.

Solche Anlagen eignen sich daher nur bedingt für die Klärschlammentsorgung aus dezentralen Abwasserbehandlungsanlagen kleinerer regionaler Betreiber.
Für diese kleineren und mittleren Anlagen existieren oft keine geeigneten wirtschaft-lichen Konzepte zur thermischen Behandlung der anfallenden Schlämme.

Ausgehend von diesem Stand der Technik lag der Erfindung die Aufgabe zugrunde, einen Apparat für kontinuierlich oder diskontinuierlich ablaufende Stoff-und/oder Wärmeübergangsprozesse, insbesondere zur Trocknung und/oder Verbrennung von Klärschlämmen oder anderen Abfallstoffen, bereitzustellen, der die genannten Nachteile nicht aufweist, eine hohe Flexibilität hinsichtlich des zu behandelnden Einsatzgutes besitzt und dessen Kompaktheit einen mobilen oder semimobilen Einsatz gestattet.

Erfindungsgemäß wird die Aufgabe durch einen Apparat mit den in Anspruch 1 genannten Merkmalen gelöst. Vorteilhafte Ausgestaltungen ergeben sich aus den Unteransprüchen.

Die Vorteile einer hohen Kompaktheit und Flexibilität werden erreicht durch ein im wesentlichen vertikales mehrstufiges Reaktionsgefäß mit mehreren durch bodenartige Einbauten voneinander getrennte Sektionen zur fortschreitenden Behandlung des Einsatzgutes mit einem fluiden Behandlungsmedium, wobei das Behandlungsgut in eine Aufgabesektion am Anlagenkopf aufgegeben wird und unter Einwirkung der Schwerkraft die Behandlungszonen im Gegen-, Gleich- oder Querstrom zu dem Behandlungsmedium durchläuft, umfassend
- eine erste Behandlungssektion mit einer Eintritts-und/oder Austrittsöffnung für das fluide Behandlungsmedium und einem gasdurchlässigen, im wesentlichen horizontalen Boden,
- eine zweite Behandlungssektion mit Eintrittsöffnungen im Gehäusemantel zum Zuführen eines Teilstroms oder des Gesamtstroms des fluiden Behandlungsmediums,
- eine dritte Behandlungssektion mit einem gasdurchlässigen Anströmboden zur gleichmäßigen Verteilung eines Teilstroms oder des Gesamtstroms des fluiden Behand- lungsmediums über den gesamten Apparateinnenquerschnitt und einer gasdichten Feststoffaustrageinrichtung für das behandelte Gut am Apparateboden.

Die Gutaufgabesektion am Apparatekopf besorgt das Dosieren des Einsatzgutes und seine gleichmäßige Verteilung über den Querschnitt.
Sie wird begrenzt von der Apparateabdeckung mit mindestens einem Zuführstutzen oder einem Zuführorgan und einem gutdurchlässigen Boden zur ersten Behandlungssektion.

Um bei schwierigem, bspw. pastösem Einsatzgut eine gleichmäßige Verteilung über den Reaktorquerschnitt zu erreichen, wird in einer bevorzugten Ausführungsform die Aufgabesektion in einzelne voneinander getrennte Sektoren unterteilt. Jeder Sektor besitzt eine separate Gutzuführung und wird unabhängig vom benachbarten beschickt. Dies kann in vorteilhafter Weise durch eine mit dem Apparat verbundene Dosier- und Verteileinrichtung erfolgen, die in zeitlicher Abfolge nacheinander die Aufgabesektoren befüllt.

Die Abgrenzung zur ersten Behandlungssektion kann ein Lochboden sein. In diesem Falle würde das bspw. pastöse Gut durch die Löcher in Form von Strängen in die erste Sektion gepreßt.

In alternativen Ausführungsformen kann diese Abgrenzung auch ein Rost oder ein festes oder bewegliches Sieb sein.

Es ist ebenfalls denkbar, diese Abgrenzung aus zusammenwirkenden rotierenden Elementen auszubilden, die den gesamten Innenquerschnitt bedecken. Dies können rotierende Schnecken oder Walzen sein, die das Einsatzgut erfassen und nach unten fördern.

Die Auswahl des Bodens wird vorrangig vom Einsatzgut bestimmt.

Für pastöses Einsatzgut haben sich Lochböden oder Böden aus parallelen gegenläufig drehenden Schnecken als vorteilhaft erwiesen.

Für stückiges Gut eignen sich Roste, Schnecken- oder Walzenböden.

Siebe oder Walzenböden werden für körniges Gut bevorzugt, während für die Beschickung faserigen Gutes vorrangig Schnecken- oder Walzenböden zum Einsatz kommen.

Schließlich ist es auch denkbar, bei sehr leicht zu handhabendem Einsatzgut auf die Anordnung eines Bodens in der Aufgabesektion gänzlich zu verzichten, sofern gewährleistet ist, daß das Gut ausreichend gleichmäßig in die erste Behandlungs-sektion gelangt.

In der ersten Behandlungssektion wird das Gut im Gleich-, Kreuz- oder Gegenstrom mit einem fluiden Behandlungsmedium kontaktiert. Diese Sektion besitzt einen Boden und eine darüber angeordnete Ein-und/oder Austrittsöffnung für das Behandlungsmedium. Der Boden erfüllt mindestens drei Funktionen:
eine Rückhaltefunktion für das Einsatzgut, eine Durchgangsfunktion für das fluide Medium sowie eine Austragsfunktion für das diese Sektion verlassende Gut.

Darüber hinaus kann ihm bei zu Zusammenbackungen neigendem Gut noch eine Zerkleinerungsfunktion für das Gut aufgegeben werden.

Um die genannten Funktionen zu erfüllen, kann der Boden sehr verschiedenartig ausgebildet sein.
Eine bevorzugte Ausführungsform für pastöses Aufgabegut, die alle vier Funktionen erfüllt, umfaßt den gesamten Querschnitt einnehmende, parallele, mit Brecherelementen bestückte Wellen.
Indem die Wellen an mindestens einer Seite den Gehäusemantel gasdicht durchstoßen, können sie außerhalb des Apparates angetrieben werden. Zahnrad- oder Kettengetriebe verknüpfen die Wellen untereinander. Durch gegenläufige Rotation benachbarter Wellen wird das aufliegende Gut von den Brecherelementen auf dem gesamten Querschnitt erfaßt, nach unten abgezogen und zerkleinert.

Alternative Ausführungsformen umfassen parallele gegenläufig rotierende Schnecken oder Walzen, die sich nahezu berühren oder einen je nach Gut mehr oder weniger großen Spalt freilassen.

In vorteilhafter Ausgestaltung besitzt diese erste Behandlungssektion eine rechteckige, insbesondere quadratische Querschnittsform. Dies erleichtert die Ausführung des den gesamten Querschnitt einnehmenden und ausschließlich aus Rückhalte- und Dosierelementen zusammengesetzten Bodens und erhöht dessen Wirksamkeit.

Die anschließende zweite Behandlungssektion weist Eintrittsöffnungen für einen Teil- oder den Gesamtstrom des Behandlungsmediums auf. Durch radiales und/oder tangentiales Zuführen eines Fluids wird ein intensiver Stoff- und/oder Wärmeaustausch erreicht.
Die aus der ersten Sektion herabgleitenden Gutpartikel werden von der intensiven Strömung erfaßt und herumgewirbelt. Starke Turbulenzen und Rezirkulationen sichern hohe Verweilzeiten. Durch das Herumwirbeln und gegenseitige Anstoßen werden Agglomerate aufgerieben, zum Teil regelrecht zerstrahlt und dadurch immer wieder neue reaktive Oberflächen freigelegt, was Stoffaustauschreaktionen zusätzlich fördert.
In der dritten Behandlungssektion wird über einen Anströmboden ein Teil- oder der Gesamtstrom des fluiden Behandlungsmediums gleichmäßig über den Innenquerschnitt des Apparates verteilt. Der Anströmboden dient gleichzeitig als Rückhalteeinrichtung für aufliegendes Gut, das hier in einem Fest- oder Wanderbett vom Behandlungsmedium durchströmt wird.
In einer bevorzugten Ausgestaltungsform ist der Ansrömboden zweigeteilt ausgeführt, um mittig einen Durchgang zur Austrageinrichtung freizulassen.

Für zu Versinterungen und Zusammenbackungen neigendes Gut ist oberhalb des Anströmbodens eine Gutförder- und Zerkleinerungseinrichtung angeordnet. Diese besteht aus parallelen, mit Brecherelementen bestückten Wellen, die das auftreffende Gut erfassen, abziehen und zerkleinern.
Durch bereichsweise gleichsinnige Rotation benachbarter Wellen wird darüber hinaus ein horizontaler Transport auftreffenden Gutes in Drehrichtung bewirkt. Dies ist dann von Vorteil, wenn das Gut in Richtung auf die mittig angeordnete Austrageinrichtung gefördert werden soll. Die Drehrichtung ist dann so eingerichtet, daß auftreffendes oder aufliegendes Gut von den Rändern zur Mitte hin transportiert und dort von den gegenläufigen Brecherelementen erfaßt und nach unten gefördert wird. Gebildete Schlacken und Versinterungen werden auf diese Weise zuverlässig aufgebrochen, und es wird sichergestellt, daß ein maximales Stückmaß nicht überschritten wird. Dies schützt die unterhalb der Brechereinrichtung am Apparateboden angeordnete Austrageinrichtung vor Störungen.

Durch die Erfindung können Anlagen für kontinuierlich oder diskontinuierlich ablaufende Stoff- und/oder Wärmeübergangsprozesse, insbesondere solche zur thermischen und/oder stofflichen Behandlung von Abfallstoffen, in einer sehr kompakten Bauweise mit geringem Platzbedarf und wenig Anlagenperipherie erstellt werden. Daraus resultiert die Möglichkeit eines modularen Aufbaus der einzelnen Systemblöcke und die sehr gute Transportfähigkeit infolge begrenzter Bauhöhe und eines geringen Gewichtes.

Ferner besitzt der erfindungsgemäße Apparat eine hohe Variabilität hinsichtlich der ablaufenden Prozesse und des Einsatzgutes.
Es können Trocknungs-, Entgasungs-, Vergasungs-und/oder Verbrennungsprozesse durchgeführt werden.
Die Einsatzstoffe können pastös, stückig, körnig oder faserig sein.

In besonders vorteilhafter Weise kann der Apparat zur gemeinsamen Klärschlammtrocknung und -verbrennung eingesetzt werden.
Wird er nur als Trockner betrieben, so können bspw. gemahlene Kunststoffschnitzel, Granulate, Körner, aber auch Grünfutter oder Holzhackschnitzel eingesetzt werden. Neben der Anpassung des Betriebsregimes bedarf es hierfür in erster Linie der Auswahl einer geeigneten Beschickungseinrichtung zum zuverlässigen Eintrag und zur gleichmäßigen Verteilung des Gutes in dem Apparat sowie der Auswahl der geeigneten bodenartigen Einbauten. Eingangs der Beschreibung wurde darauf erschöpfend eingegangen.

Bei der Verwertung brennbare Bestandteile enthaltenden, feuchten Einsatzgutes, wie bspw. entwässerten Klärschlamms, wird in die beiden unteren Behandlungssektionen Verbrennungsluft eingeführt. Dann laufen in diesen Sektionen Verbrennungsprozesse ab. Die freiwerdenden Verbrennungsgase werden in die erste Behandlungssektion eingeleitet, um dort in direktem Kontakt das Einsatzgut so weit zu trocknen, daß es in den nachfolgenden Sektionen selbstgängig verbrennt. Durch Einstellung des Volumenverhältnissses der in die beiden Verbrennungszonen eingeleiteten Verbrennungsluft können die ablaufenden Vergasungs- und Verbrennungsreaktionen in gewünschter Weise gesteuert werden.

Soll ein Einsatzgut getrocknet oder zu einem anderen Zweck wärmebehandelt werden, so finden in den Behandlungssektionen des Apparates ausschließlich Wärmeübergangsprozesse statt. Die warmen oder heißen Prozeßgase werden in diesem Falle nicht im Apparat selbst durch teilweise oder vollständige Gutverbrennung erzeugt, sondern von einem externen Wärmeerzeuger bereitgestellt und in wenigstens eine der Behandlungssektionen eingeführt.
Gut und Gas können dann im Gleich-, Kreuz- oder Gegenstrom geführt werden, indem ein Teil- oder Gesamtstrom des Prozeßgases in die erste und/oder zweite und/oder dritte Behandlungssektion eingeführt wird.

Weitere Einzelheiten und Vorteile der Erfindung werden nachfolgend in Ausführungsbeispielen anhand der Zeichnungen näher erläutert.

### Hierbei stellen dar:

- Fig.1: Schnittdarstellung des erfindungsgemäßen Apparates
- Fig.2: Schnittdarstellung einer Dosier- und Verteileinrichtung am Apparatekopf
- Fig.3: Draufsicht auf die Apparateabdeckung
- Fig.4: Ausschnitt eines Rückhalte- und Dosierbodens der ersten Behandlungssektion (Trocknungszone) in Draufsicht
- Fig.5: Ausschnitt einer Gutförder- und Zerkleinerungseinrichtung der dritten Behandlungssektion in Draufsicht
- Fig.6: Einrichtung gemäß Fig.5 in Seitenansicht
- Fig.7: Fließschema einer Klärschlammverbrennung
- Fig.8: Fließschema einer Trocknungsanlage

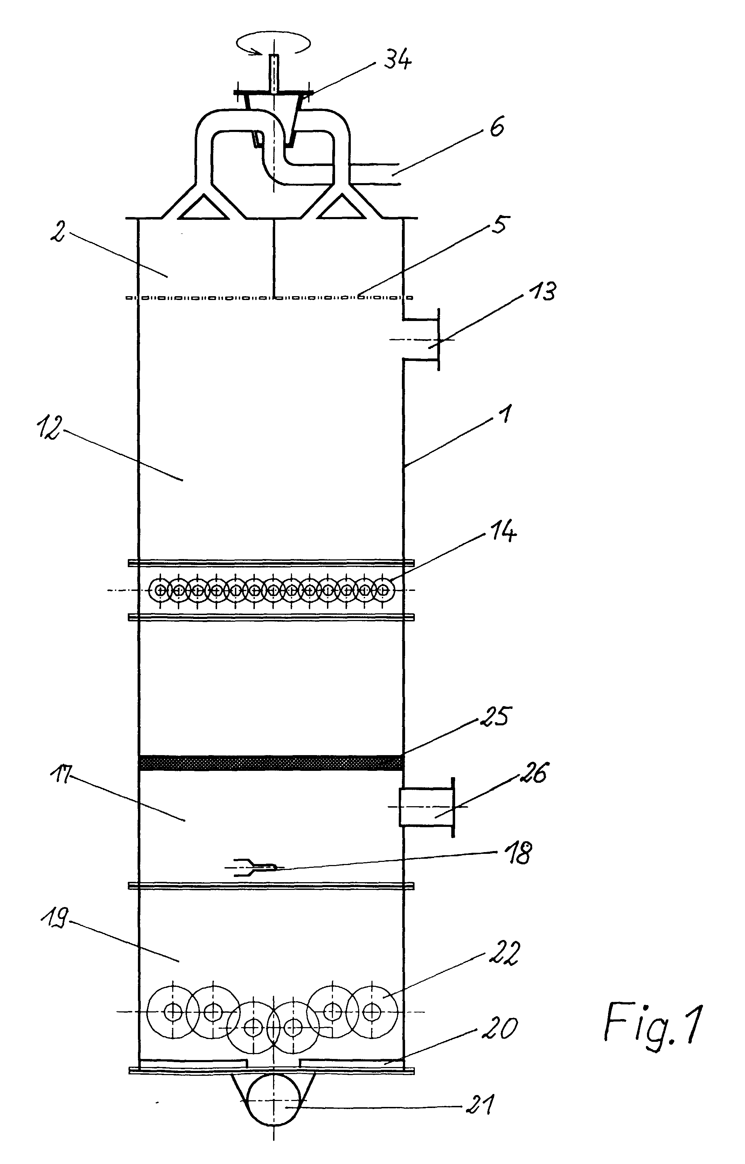

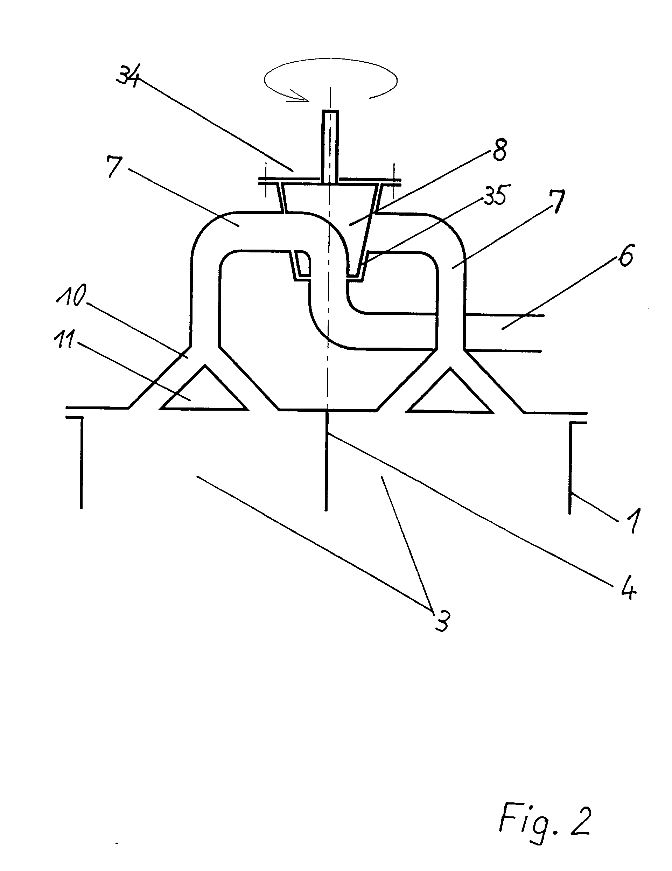

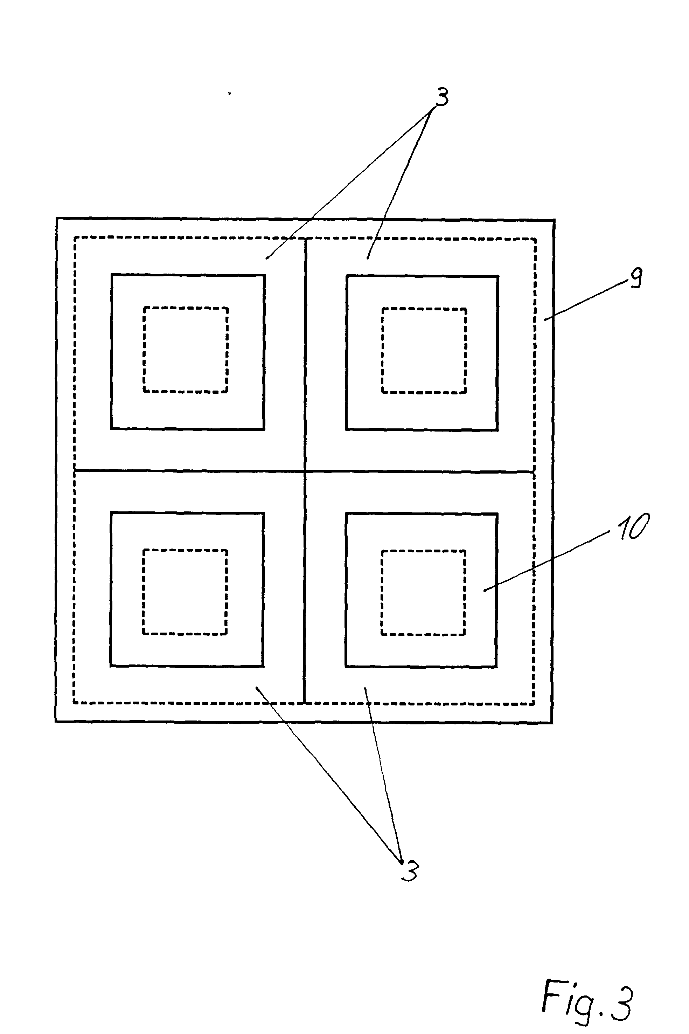

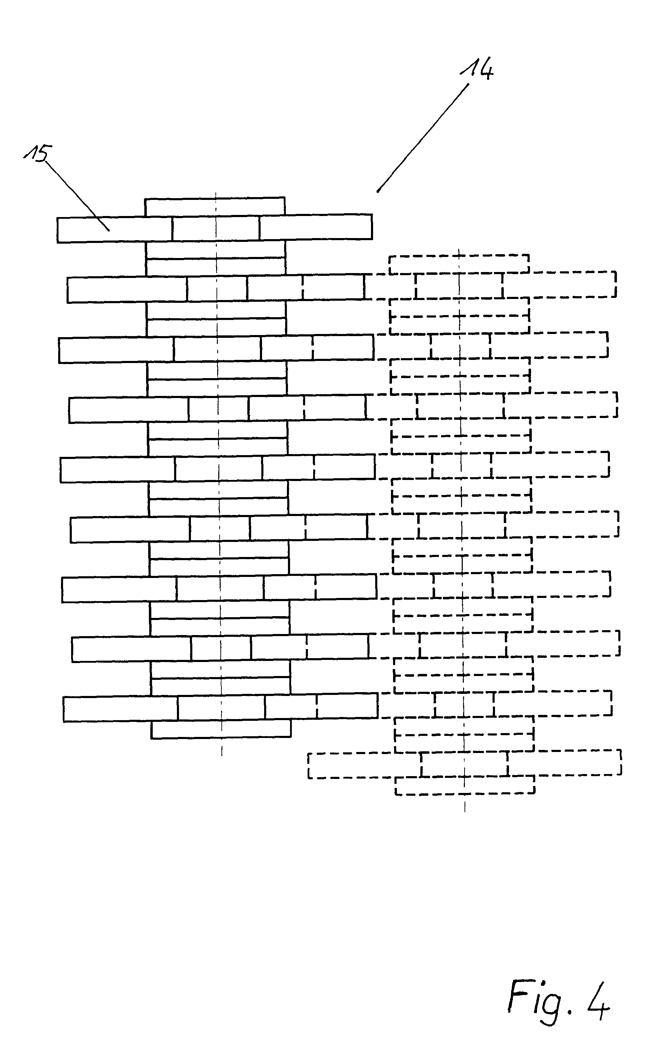

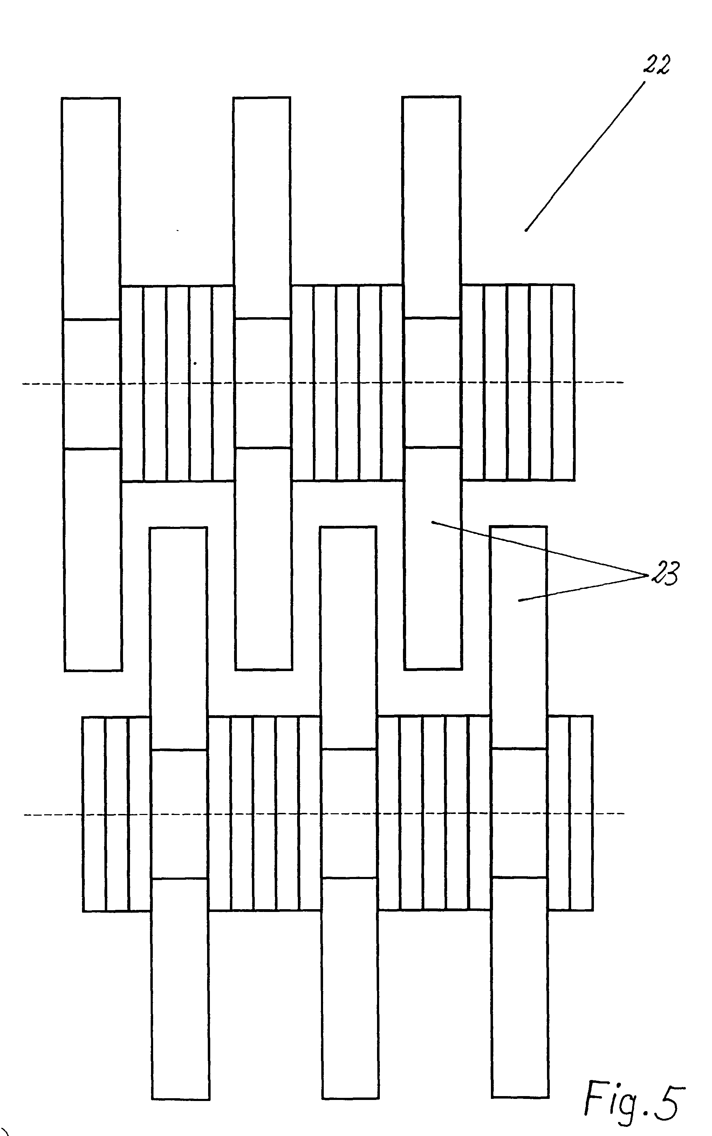

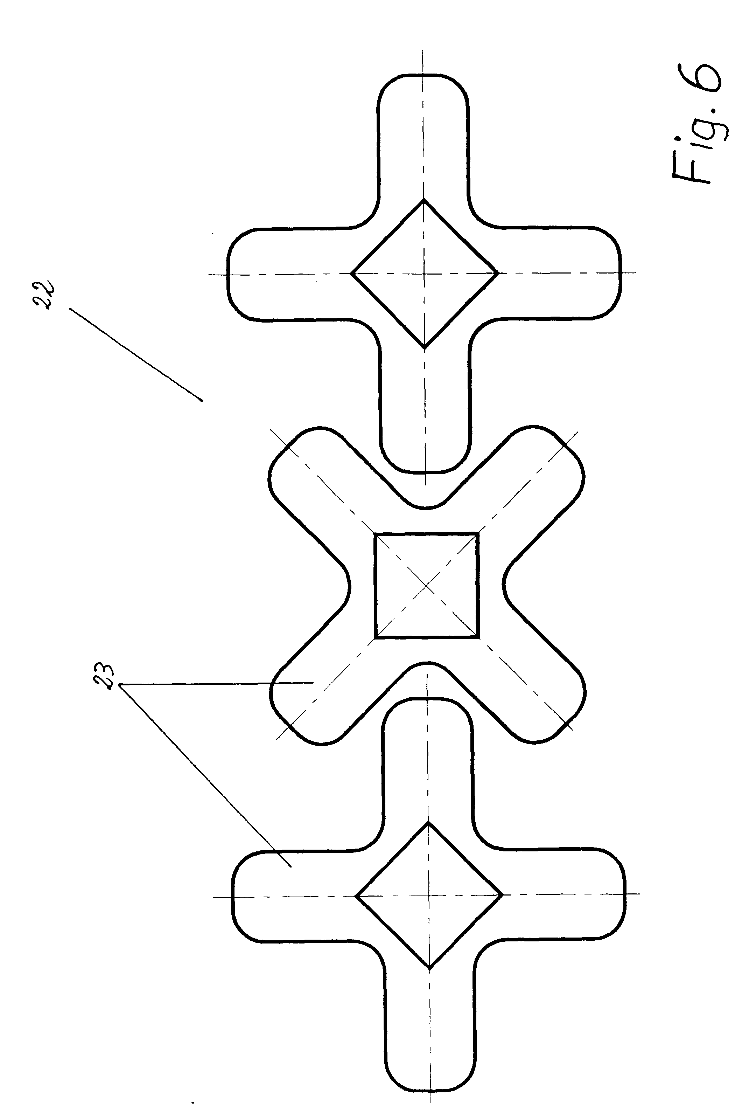

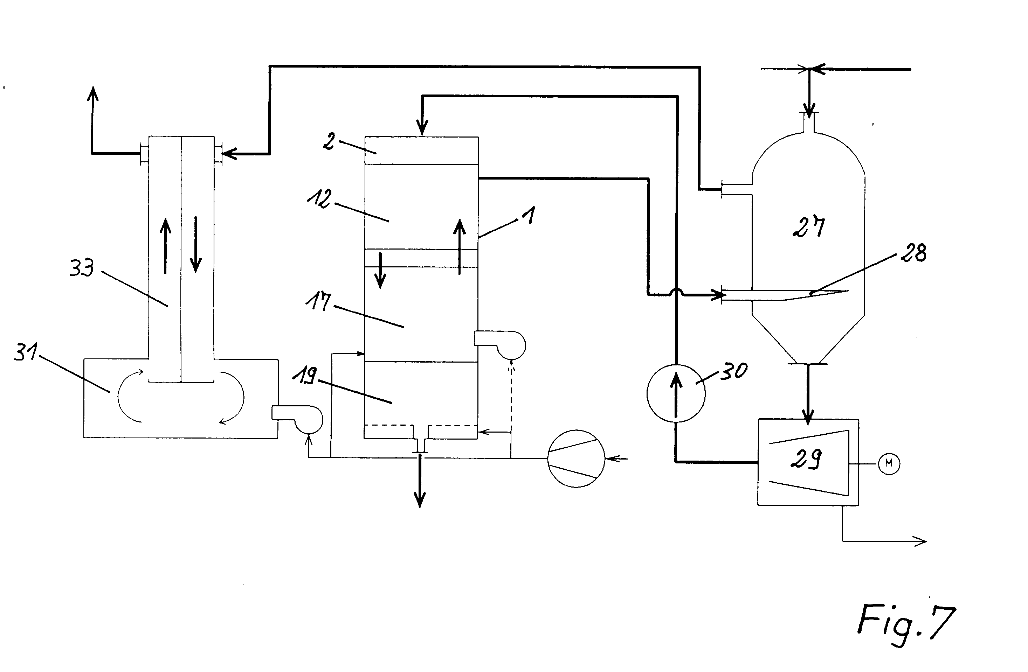

Anhand der Figuren 1-7 wird die Erfindung am Beispiel einer Klärschlammverbrennung dargestellt.

Beim Einsatz des erfindungsgemäßen Apparates in einem Verfahren zur Klärschlammverbrennung erfolgt in der ersten Behandlungssektion eine Trocknung, in der zweiten eine Vergasung und Verbrennung im Flugstrom und in der dritten Behandlungssektion die Verbrennung bzw. Veraschung des Einsatzgutes im durchströmten Fest- bzw. Wanderbett. Bei Heizwerten ab etwa 10000 kJ/kg TS kann dieses Verfahren energieautark durchgeführt werden.

Entwässerter Klärschlamm mit einem Trockensubstanzgehalt von etwa 30 Ma% wird aus einem Pufferbehälter entnommen und mittels einer Dickstoffpumpe 30 über ein Zuführungsrohr 6 in die Aufgabesektion 2 am Reaktorkopf eingebracht. Um bei dem schwierigen pastösen Aufgabegut eine gleichmäßige Verteilung über den Apparatequerschnitt zu erreichen, ist die Aufgabesektion 2 durch eingeschweißte Trennwände 4 in vier gleich große, voneinander getrennte Sektoren 3 unterteilt. Jeder Sektor 3 wird unabhängig vom benachbarten aus einer auf dem Reaktordeckel 9 aufsitzenden Dosier- und Verteileinrichtung 34 befüllt, die eine Aufteilung des durch das Zuführungsrohr 6 zum Reaktor geförderten Klärschlamms in vier Teilströme und deren Eintritt in die vier Aufgabesektoren bewirkt.

Das Zuführungsrohr 6 mündet axial in eine rotationssymmetrische Kammer 35 mit vier in einer Ebene an der Mantelfläche angeordneten, jeweils um 90° versetzten Ausgängen 7. Ein in die Kammer 35 eingezogener Rotationskörper 8 besitzt einen durchgehenden Strömungskanal, der das Zuführungsrohr 6 mit jeweils einem der Ausgänge 7 verbindet. Von außen angetrieben, in einstellbarem Takt umlaufend gibt er immer nur einen Ausgang 7 frei, während er die drei anderen geschlossen hält. Auf diese Weise wird der kontinuierlich zugeführte Materialstrom analog dem Umlauf des Rotationskörpers 8 in zeitlicher Abfolge in vier gleiche Teilströme aufgeteilt. Ein Zeitglied steuert den taktweisen Umlauf des Rotationskörpers 8 und sein Verharren in vier Positionen.
Jeder Sektor 3 wird von einem der vier Abgangsrohre 7 der Dosier- und Verteileinrichtung 34 gespeist. Zu diesem Zweck besitzt der Reaktordeckel 9 vier, je einen Sektor beaufschlagende Einlaßöffnungen 10, die in einem sich pyramidisch erweiternden Ubergangsbereich in die Aufgabekammern münden. Ein hier angeordneter komplementärer pyramidischer Staukörper 11 hat die Aufgabe, die Kernströmung aufzuspalten. Die taktweise durch die vier Verteilrohre 7 gepreßte Schlammbeschickung wird durch den Staukörper 11 gespreizt und füllt gleichmäßig die Kammern der Aufgabesektion 2 aus.
Ein Lochboden 5 mit Bohrungen von einem Durchmesser von ca. 15 mm in einem Raster von etwa 70 x 70 mm schließt die Aufgabesektion nach unten zur Trock-nungszone 12 hin ab.
Durch den Druck der nachströmenden Rohmasse wird der Schlamm durch den Lochboden 5 in die darunter liegende Trocknungszone 12 gepreßt. Die Einteilung des wirksamen Querschnitts in Sektoren ist hier aufgehoben.
Der durch den Lochboden 5 eingepreßte Schlamm tritt in Form von an Würste erinnernden Strängen oder Schlagen ein. Die von oben herabwachsenden Schlammstränge reißen in unregelmäßigen Abständen ab und fallen auf den Trocknerboden 14 bzw. das dort in einem Haufwerk aufliegende Material. Während des Betriebes wird ein Haufwerk von 60 - 70 cm Höhe aufrechterhalten, genährt von den laufend von der Decke herabwachsenden und herabfallenden Schlammsträngen.
Durch direkten Kontakt mit aus den Verbrennungszonen 17 und 19 aufsteigenden Verbrennungsgasen erfolgt eine Entfeuchtung des Gutes. Diese heißen Gase umströmen die herabhängenden Schlammstränge und durchströmen im Gegenstrom den in dem Haufwerk nach unten bis auf den Trocknerboden wandernden feuchten Schlamm, der dabei fortschreitend auf einen Feststoffgehalt, der eine selbstgängige energieautarke Verbrennung gewährleistet, also je nach Feststoffgehalt und Heizwert auf 50-60 Ma% TS getrocknet wird.

Die Heißgase kühlen in der Trocknungszone 12 ab und reichern sich gleichzeitig mit Produkten der Guttrocknung, also Wasserdampf, anderen flüchtigen Bestandteilen und möglicherweise auch kleinen Feststoffpartikeln an.
Im oberen Teil der Trocknungszone wird über einen seitlichen Auslaß 13 das Prozeßgas-Brüden-Gemisch mit einer Temperatur um 150°C abgezogen und einem nachgeschalteten Wäscher 27 zugeführt.

Der Aufenthalt in der Trocknungszone 12 verändert das Aufgabematerial dergestalt, daß es aus seinem ursprünglich fließfähigen bis pastösen Zustand in eine krümelige Struktur vor Verlassen der Trocknungszone an deren Boden 14 übergeht.
Der Trocknerboden 14 erfüllt eine Rückhaltefunktion für das aufliegende Haufwerk trocknenden Schlammes, eine Durchgangs funktion für die aufsteigenden heißen Verbrennungsgase und eine Zerkleinerungs- und Austrags- funktion für den getrockneten, der nachfolgenden Verbrennungszone zuzuführenden Schlamm.
Er besteht aus horizontalen, parallel angeordneten, den gesamten Querschnitt bedeckenden, gasdicht in gegenüberliegenden Wänden des Reaktorgehäuses 1 gelagerten Wellen 16. Diese von außen angetriebenen und durch geeignete Getriebeelemente, wie Zahnräder, miteinander gekoppelten Wellen 16 sind mit ineinandergreifenden oder kämmenden Sternen oder Stacheln 15 bestückt. Die entgegengesetzte Rotation benachbarter Wellen 16 bewirkt ein Fördern und, gleichzeitiges Zerkleinern des getrockneten Schlammes, indem ähnlich dem Prinzip eines Brechers die Stacheln und Sterne 15 das aufliegende Gut auflockern, Stücke ausreißen und beim Weiterdrehen durch die Wechselwirkung der Vorsprünge und Vertiefungen benachbarter Glieder zerkleinern. Die Rotationsgeschwindigkeit der Wellen 16 steuert den Durchsatz.

Die aus dem Trocknerboden 14 austretenden Schlammpartikel gleiten in die Verbrennungszone 17 hinab.
In ihrem unteren Bereich besitzt diese Zone 17 am Man-tel drei um 120° versetzte Öffnungen 18 zum gleichgerichteten tangentialen Eindüsen von Sekundärluft. Die tangentiale Luftzufuhr in die zylindrische Brennzone 17 initiiert eine turbulente Wirbelströmung. Diese Strömung erfaßt sowohl die aus der Trocknungszone 12 herabgleitenden Schlammkrümel als auch aus der darunter liegenden Zone 19 von der Primärluft mitgerissene Partikel. In dieser Wirbelströmung aus unverbrannten, brennenden und schon ausgebrannten Teilchen kommt es zu einem intensiven Stoff- und Wärmeaustausch.
Durch das Herumwirbeln und gegenseitige Anstoßen werden Agglomerate aufgerieben, zum Teil regelrecht zerstrahlt und immer wieder neue reaktive Oberflächen geschaffen.

Die Verbrennungstemperatur stellt sich zwischen 900°C und 1000°C ein. Im Interesse einer stabilen Verbrennung sollten 900°C nicht unterschritten werden. Zur Aufrechterhaltung der Verbrennung bei Einsatzstoffen mit geringem Heizwert sind in die Sekundärluftleitungen Öllanzen integriert, die bei Unterschreiten der vorgegebenen Mindesttemperatur Heizöl als Hilfsbrennstoff eindüsen. Die maximale Verbrennungstemperatur wird konstruktiv und prozeßbedingt - da unterhalb des Ascheschmelzpunktes gefahren wird - auf 1000°C festgelegt. Um Ablagerungen durch gesinterte Aschekomponenten zu vermeiden, wird der Verbrennungsprozeß vorzugsweise im unteren Temperaturbereich gehalten.

Ein Gemisch aus veraschten, nicht zerriebenen brennenden und unverbrannten Stücken verläßt die Flugstromverbrennungszone und lagert sich auf einem Bett in der dritten, unteren Reaktorzone 19 ab. Das Bett wird im Gegenstrom von einem Teilstrom der Verbrennungsluft durchströmt, ohne die Schüttung zu fluidisieren. Dieser primäre Teilstrom der Verbrennungsluft wird über einen Anströmboden 20 gleichmäßig über den Querschnitt verteilt eingedüst. Als besonders vorteilhaft hat es sich erwiesen, bis auf die Ascheabzugsöffnung 21 den Boden vollständig mit einem mit Tressengewebe bespannten Rahmen zu bedecken. Das Tressengewebe, von unten angeströmt, bewirkt eine ausgezeichnete Gleichverteilung der einströmenden Primärluft. Die Strömungsgeschwindigkeit der Primärluft darf die Wirbelgeschwindigkeit nicht überschreiten, so können Kanalbildung im Festbett oder an der Innenwandung oder Luftdurchbrüche weitgehend vermieden werden.

Wie in einer Festbettfeuerung durchwandern die Partikel das von oben genährte und nach unten abgezogenen Bett von der Oberfläche zum Boden hin. Der Ausbrandgrad nimmt innerhalb des Bettes von oben nach unten zu, bis es am Boden schließlich nur noch ausgebrannte Ascheteilchen enthält.
Im Gegenstrom wird die Asche abgekühlt und die Primärluft vorgewärmt. Sie versorgt auf ihrem Weg durch die Schüttung die brennbaren Bestandteile mit Sauerstoff.

Das Volumenverhältnis von Primär- zu Sekundärluft liegt im Bereich von 10:90 bis 40:60.

In der Aschekastenmitte in einem nicht mit Tressengewebe bespannten Bereich befindet sich eine Abzugsöffnung 21 mit einer Zellradschleuse zum Austragen der auf etwa 70°C abgekühlten Asche.

Oberhalb des Anströmbodens 20 ist eine Gutförder- und Zerkleinerungseinrichtung 22 angeordnet. Eventuell auftretende Versinterungen oder Schlackebildungen werden damit mechanisch zerstört, um ein maximales Stückmaß für die Austragvorrichtung nicht zu überschreiten. Sie umfaßt von außen angetriebene, mit Brecherelementen 23 bestückte Wellen 24. Die Drehrichtung aller Wellen 24 ist so ausgerichtet, daß ein Fördereffekt zur Kastenmitte hin auftritt. Dies wird dadurch erreicht, daß alle Brecherelemente einer Seite den gleichen Drehsinn aufweisen. Zu diesem Zweck sind die Wellen 24 jeder Seite über ein Kettengetriebe miteinander gekoppelt.

Die in den beiden Verbrennungszonen 17 und 19 durch vollständige oder unvollständige Verbrennung erzeugten Verbrennungsgase steigen mit einer Temperatur im Bereich von 900°C - 1000°C auf und verlassen die Verbrennungszone 17 durch den gasdurchlässigen Trocknerboden 14 in die darüber liegende Trocknungszone 12.
Um die Wärmebilanz der Verbrennungszonen 17 und 19 zu verbessern, hat es sich als vorteilhaft erwiesen, unterhalb des Trocknerbodens 14 einen Festkörperstrahler 25 anzuordnen. Er ist kreisförmig in das Gehäuse 1 eingepaßt und besitzt ähnlich einem Lüfterrad strahlenförmig angeordnete, geneigte Schaufeln. Während die projizierte Fläche nach unten geschlossen ist, verbleiben zwischen den vorzugsweise um 30° geneigten Schaufeln so breite Spalte, die ein Durchgleiten der vom Trocknerboden herabgleitenden Stücke gestatten. Im Gegenstrom dazu strömen die heißen Verbrennungsgase nach oben. Beim Durchtritt geben sie einen Teil ihrer Wärme an den Strahler 25 ab und heizen ihn bis zur Rotglut auf. Ein Teil dieser Festkörperstrahlung strahlt zurück in die Verbrennungszonen 17 und 19.

Unterhalb des Strahlers 25 ist am Gehäuse außerdem ein Stutzen 26 für einen Anfahrbrenner angeordnet. Der Brenner wird nur in der Anfahrphase betrieben. Danach wird die Heizölzufuhr unterbrochen und die Luftzufuhr bis auf einen minimalen Kühlstrom gedrosselt.

Wie eingangs des Ausführungsbeispiels bereits ausgeführt, treten die Verbrennungsgase in der Trocknungszone in direkten Kontakt mit dem aufgegebenen Klärschlamm. Nach Abgabe ihrer fühlbaren Wärme und Anreicherung mit Wasserdampf, anderem Kondensat und Staub verlassen die Prozeßgase den Reaktor über einen Auslaß 13 in der Trocknungszone 12. Vor Einleiten in die Atmosphäre bedürfen diese verunreinigten Gase einer Wäsche und einer Nachverbrennung.
Zur Verringerung des apparativen Aufwandes wird die Gaswäsche in einem Behälter mit Frischklärschlamm als schadstoffabsorbierende Waschflüssigkeit durchgeführt. Der Wäscher 27 besteht aus einem vertikalen Behälter mit einem Zulauf für kalten Rohschlamm von oben und einem unten liegenden Schlammabzug. Das Gaszuführungsrohr endet unterhalb des Flüssigkeitsspiegels in einer Begasungseinrichtung. Diese ist als zylindrischer Schuß, oben geschlossen und unten offen, mit einem Man-tel aus Lochblech gestaltet. Das eingespeiste Gas perlt feinverteilt durch die Bohrungen des Blechmantels. Ein Vorteil dieser Gestaltung ist, daß sie nicht verstopfen kann. Bei Verstopfungen der Bohrungen, bspw. durch eingetrockneten Schlamm nach längerem Stillstand, kann das Gas durch die untenliegende Öffnung ausweichen bis die Kruste in den Bohrungen wieder aufgeweicht ist. Beim direkten Kontakt der Gase mit dem Rohschlamm wird letzterer niederthermisch konditioniert. Dies hat eine bessere Ausflockung des Rohklärschlamms bei der anschließenden mechanischen Entwässerung zur Folge. Der aus dem Wäscher austretende Klärschlamm wird im nachgeschalteten Dekanter 29 auf einen TS-Gehalt von 28-30 Ma% entwässert und gelangt über eine Dickstoffpumpe 30 und die Dosier- und Verteileinrichtung 34 in die Aufgabesektion 2 des Reaktors, wie eingangs erläutert.

Die im Wäscher 27 hochperlenden Gase kühlen ab und werden von wasserlöslichen Schadstoffen und Staub befreit. Mit einer Austrittstemperatur von etwa 70-80°C treten sie dampfgesättigt am Kopf des Wäschers aus und werden einer Nachverbrennung zugeführt, um die aus der unterstöchiometrisch geführten Verbrennung im Reaktor im Rauchgas verbliebenen brennbaren Bestandteile, hauptsächlich Kohlenmonoxid, aufzuoxidieren und gleichzeitig mitgeführte geruchsbildende Emissionen zu eliminieren.

Die Nachverbrennung findet in einer mit einem Hilfsbrenner ausgerüsteten Brennkammer 31 statt. Auf die Brennkammer 31 ist ein regenerativer Plattenwärmeübertrager 33 zum Vorwärmen der eintretenden und Abkühlen der austretenden Gase aufgesetzt. Die vom Wäscher 27 herangeführten gereinigten Gase durchlaufen den Wärmeübertrager 33 im Gegenstrom zu den abziehenden heißen Verbrennungsgasen und gelangen aufgeheizt in die Brennkammer 31. Durch Zumischen von Verbrennungsluft zündet das Gemisch und verbrennt. Da aus ökologischen Gründen ein vollständiger Ausbrand angestrebt wird, wird die Nachverbrennung bei 1000°C - 1100°C durchgeführt. Bei nicht selbstgängiger Verbrennung oder Unterschreiten der Mindesttemperatur wird Hilfsbrennstoff zugesetzt.

Nach Abgabe ihrer fühlbaren Wärme im nachgeordneten Wärmeübertrager 33 und ggf. einer abschließenden Rauchgasreinigung gelangen die Gase mit einer Temperatur von 160°C - 200°C in den Kamin.

In dem beschriebenen Reaktor zur Trocknung und Verbrennung des Klärschlamms besitzen die Aufgabesektion 2, die Trocknungszone 12 und die untere Brennzone 19 einen rechteckigen, insbesondere quadratischen Querschnitt. Dies erleichtert die Ausführung des ausschließlich aus Brecherelementen zusammengesetzten Bodens 14 und der Förder- und Zerkleinerungseinrichtung 22.
Die Flugstromverbrennungszone 17 hingegen weist einen kreisförmigen Querschnitt auf, um die Ausbildung einer wirbelnden, durch Turbulenzen und Rezirkulationen geprägten Strömungszone ohne Toträume zu fördern. Dabei hat es sich erwiesen, daß in den Ubergangsbereichen von einer Querschnittsform zur anderen auf Adapterstücke oder zusätzliche Einbauten verzichtet werden kann. Durch abgelagertes Gut stellt sich von selbst ein gleitender Ubergang ein.

Die ausgeführte Anlage zur Klärschlammverbrennung ist für 300 kg/h Trockensubstanz konzipiert. Dies bedeutet einen Durchsatz von 6 m³/h Rohschlamm mit 5 Ma% Trokkenmasse und einen Produkteintrag von 1000 kg/h auf 30 Ma% TS entwässerten Klärschlamms.
Bei voller Auslastung können pro Tag 144 m³ Rohschlamm und somit 7,2 t Trockensubstanz bewältigt werden.
Geht man davon aus, daß die Anlage nicht stationär betrieben wird, sondern mobil und legt eine relativ geringe Jahresbetriebszeit von 6000 h/a zugrunde infolge der durch die im Zusammenhang mit dem Ortswechsel bedingten Transport- und Montagearbeiten, so ergibt das eine Jahresanlagenkapazität von 1800 t TS. Dies entspricht einer Menge von 6000 t/a Klärschlamm mit einem Trockensubstanzanteil von 30 Ma%, die ohne die erfindungsgemäße Lösung deponiert oder aufwendig zwischengelagert werden müßten.

Diese Zahlen dokumentieren die Vorteile einer mobilen oder semimobilen Verbrennungsanlage unter Einsatz des erfindungsgemäßen Apparates gegenüber den herkömmlichen Klärschlammentsorgungsmöglichkeiten.

Kleine und mittlere Abwasserbehandlungsanlagen, die aus ökonomischen Gründen bisher keine eigene nachgeschaltete Schlammverbrennungsanlage betreiben konnten, haben die Möglichkeit, mit Hilfe der vorgeschlagenen flexiblen und sehr variabel einsetzbaren Anlage das Problem der Klärschlammentsorgung dauerhaft und günstig zu lösen. Die Anlage kann entweder an einem günstig gelegenen Standort stationär betrieben werden oder aufgrund ihrer modularen Bauweise komplett oder in einzelnen Modulen transportiert und an wechselnden Orten zum Einsatz kommen. So werden alle Anlagenteile, wie Reaktor, Wäscher, Nachbrennkammer, Gebläse usw. in Container oder Kastengestelle integriert. Auf diese Weise kann die gesamte benötigte Apparatetechnik mittels Tieflader zum Betreiber transportiert werden.

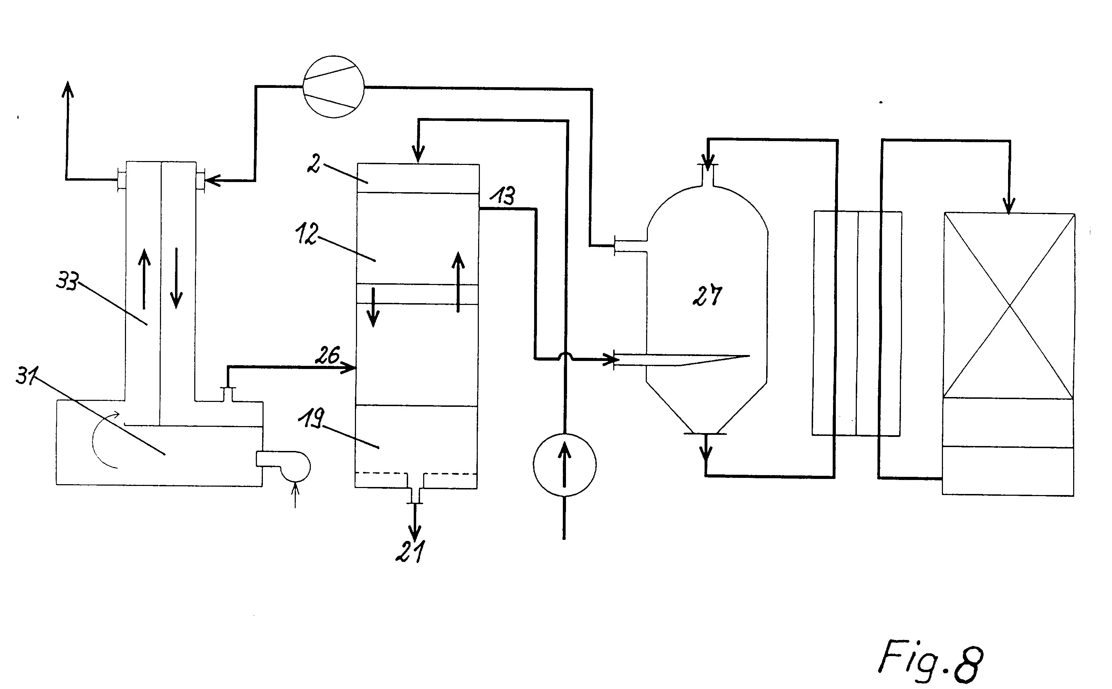

Anhand von Fig.8 unter Bezugnahme auf die anderen Figuren sei in einem zweiten Ausführungsbeispiel die Trocknung eines faserigen Einsatzstoffes mit Hilfe des erfindungsgemäßen Apparates dargestellt.

Gehäckselte Kunststoffolien werden am Kopf des Apparates gasdicht durch eine Zellenradschleuse in die Aufgabesektion 2 eingebracht. Das feuchte Gut fällt herab auf den Dosierboden 5, der das auftreffende Gut sofort erfaßt und in die darunter liegende Trocknungsstufe 12 weiterfördert. Der Boden 5 besteht aus horizontalen, mit Stacheln bestückten Wellen, die den gesamten rechteckigen Querschnitt der Dosierkammer 2 einnehmen. Die von außen angetriebenen, über ein Zahnradgetriebe in Wirkverbindung stehenden Wellen bewirken eine gleichmäßige und flächendeckende Dosierung des Feststoffes in die darunter liegendeTrocknungszone 12. Hier fällt das Gut im Gegenstrom zu dem aufsteigenden Heißgasstrom auf ein Haufwerk, das von einem zweiten, gasdurchlässigen Boden 14 zurückgehalten wird. Aus der darunter liegenden Zone strömen die Heißgase durch den Boden 14 im Gegenstrom durch das aufliegende, nach unten wandernde Material, das dabei fortschreitend getrocknet wird. Boden 14 umfaßt von außen angetriebene Wellen 16 mit aufgesetzten Brecherstacheln 15. Durch Rotieren der Wellen 16 wird das lockere Haufwerk von unten abgetragen. Mögliche lokale Zusammenbackungen des Materials werden beim Passieren des Trocknerbodens 14 aufgebrochen. Das getrockente Gut gleitet in einen Sammelraum 19 hinab, der mit einer Austrageinrichtung 21 ausgestattet ist. Die Austrageinrichtung 21 ist gasdicht ausgeführt und verfügt über einen Brückenbrechermechanismus 22, der für die Rieselfähigkeit des Gutes garantiert. Eine Kühlschnecke kühlt das auszutragende Gut ab. Oberhalb des Sammelraums 19 mit der Austrageinrichtung 21 befindet sich ein Zuführstutzen 26 für die heißen Trocknungsgase. Sie durchströmen den Trocknerboden 14 und die darüber liegende Schüttschicht feuchter Kunstofffolien. Dabei geben sie einen Teil ihrer fühlbaren Wärme ab und reichern sich gleichzeitig mit der verdampfenden oder verdunstenden Gutfeuchtigkeit an. Der Wärmeaustausch setzt sich fort während des Kontaktes der aufströmenden Gase mit aus dem Dosierboden herabfallendem feuchten Gut. Die feuchtigkeitsbeladenen, weitgehend abgekühlten Gase verlassen über eine seitliche Abzugshaube 13 im Oberteil der Trocknungskammer 12 den Apparat und werden einem Gaswäscher 27 zugeführt. Im Gaswäscher 27 besteht die Möglichkeit, kondensierbare Stoffe und Feststoffe aus dem Gas abzuscheiden. Die abgekühlten gereinigten Prozeßgase werden anschließend in einem Wärmeübertrager 33 eines externen Wärmeerzeugers 31 wieder aufgeheizt und dem Trockner über den Stutzen 26 erneut zugeführt.

## Patentansprüche

1. Apparat für kontinuierlich oder diskontinuierlich ablaufende Stoff- und/oder Wärmeübergangsprozesse, bestehend aus einem im wesentlichen vertikalen mehrstufigen Reaktionsgefäß mit mehreren durch bodenartige Einbauten voneinander getrennte Kammern zur fortschreitenden Behandlung eines Gutes mit einem fluiden Behandlungsmedium, wobei das Behandlungsgut oben am Anlagenkopf aufgegeben wird und unter Einwirkung der Schwerkraft die Behandlungszonen im Gegen-, Gleich- oder Querstrom zu dem Behandlungsmedium durchläuft,
gekennzeichnet durch
eine Gutaufgabesektion (2) am Apparatekopf zum Dosieren und gleichmäßigen Verteilen des zu behandelnden Einsatzstoffes, die von der mindestens einen Zuführstutzen (10) für das Behandlungsgut aufweisenden Apparateabdeckung (9) und einem für das Behandlungsgut durchlässigen Boden (5) begrenzt wird,
eine erste Behandlungssektion (12) mit einer Eintritts- oder Austrittsöffnung (13) für das fluide Behandlungsmedium und einem gasdurchlässigen, im wesentlichen horizontalen Boden (14)
eine zweite Behandlungssektion (17) mit Eintrittsöffnungen (18) im Gehäusemantel (1) zum Zuführen eines Teilstroms oder des Gesamtstroms des fluiden Behandlungsmediums,
eine dritte Behandlungssektion (19) mit einem gasdurchlässigen Anströmboden (20) zur gleichmäßigen Verteilung eines Teilstroms oder des Gesamtstroms des fluiden Behandlungsmediums über den gesamten Apparateinnenquerschnitt und einer gasdichten Feststoffaustrageinrichtung (21) für das behandelte Gut am Apparateboden.

2. Apparat nach Anspruch 1,
dadurch gekennzeichnet,
daß die Gutaufgabesektion (2) am Anlagenkopf einen mit dem Gehäuse (1) verbundenen Boden (5) mit Gutdurchlässen in die darunter liegende Sektion (12) und eine im Abstand darüber angeordnete gasdichte Abdeckung (9) umfaßt, wobei zwischen dem Boden (5) und der Abdeckung (9) verlaufende vertikale Zwischenwände (4) die Aufgabekammer in annähernd gleiche Sektoren (3) einteilen und jeder Sektor (3) über eine separate Gutzuführung (10) durch die Reaktorabdeckung (9) verfügt.

3. Apparat nach Anspruch 1 oder 2,
dadurch gekennzeichnet,
daß der oder die Zuführstutzen (10) mit dem oder den Ausgängen (7) einer Dosier- und Verteileinrichtung (34) für das Behandlungsgut verbunden sind und eine Zuführleitung (6) in eine Kammer (35) der Dosier- und Verteileinrichtung (34) mündet, die ebensoviele Auslässe (7) besitzt wie die Gutaufgabesektion (2) Sektoren (3) hat, und jeder dieser Auslässe (7) einen Sektor (3) der Aufgabesektion (2) beaufschlagt, wobei die Kammer (35) rotationssymmetrisch ausgebildet ist und ein darin taktweise umlaufender Rotationskörper (8) stets nur einen Auslaß (7) freigibt und die Dosier- und Verteileinrichtung (34) auf der Apparateabdeckung (9) angeordnet ist.

4. Apparat nach Anspruch 1 oder 2,
dadurch gekennzeichnet,
daß Boden (5) ein Lochboden ist oder feste oder bewegliche Siebe, Roste, Schnecken oder Walzen umfaßt und Boden (14) aus Rückhalte- und Dosierelementen über den gesamten Apparatequerschnitt besteht oder aus parallel angeordneten, mit Brecherelementen (15) bestückten Wellen (16) besteht oder feste oder bewegliche Siebe, Roste, Schnecken oder Walzen umfaßt.

5. Apparat nach Anspruch 1,
dadurch gekennzeichnet,
daß oberhalb des Anströmbodens (20) eine Gutförder- und Zerkleinerungseinrichtung (22) angeordnet ist, welche aus parallel angeordneten, mit Brecherelementen (23) bestückten Wellen (24) besteht.

6. Apparat nach Anspruch 4 oder 5,
dadurch gekennzeichnet,
daß die Wellen (16) des Bodens (14) und die Wellen (24) der Gutförder- und Zerkleinerungseinrichtung (22) mindestens an einer Seite den Apparatemantel (1) gasdicht durchstoßen und über außen liegende Antriebe angetrieben werden.

7. Apparat nach Anspruch 1,
dadurch gekennzeichnet,
daß die Behandlungssektionen (12) und (19) einen rechteckigen Querschnitt besitzen und Behandlungssektion (17) mindestens zwei versetzte Eintrittsöffnungen (18) zur tangentialen und/oder radialen Zufuhr eines Teilstroms oder des Gesamtstroms des fluiden Behandlungsmediums besitzt, wobei Behandlungssektion (17) mindestens zwei Eintrittsöffnungen zum gleichgerichteten tangentialen Zuführen eines Teilstroms oder des Gesamtstroms des fluiden Behandlungsmediums aufweist und eine kreisförmige Querschnittsform besitzt.

8. Apparat nach Anspruch 1,
dadurch gekennzeichnet,
daß der gasdurchlässige Anströmboden (20) aus Tressengewebe besteht, das Behandlungsgut entwässerter Klärschlamm und das fluide Behandlungsmedium Verbrennungsgas oder ein in einem externen Wärmeerzeuger bereitgestelltes Prozeßgas ist.

9. Apparat nach Anspruch 1 oder 7,
dadurch gekennzeichnet,
daß oberhalb der Gaseintrittsöffnungen (18) ein Festkörperstrahler (25) angeordnet ist, welcher aus einem ringförmigen Rahmen besteht, dessen freien Querschnitt gleichsinnig geneigte, radial angeordnete Lamellen derart ausfüllen, daß die projizierte Fläche geschlossen wirkt und in Sektion (17) unterhalb des Strahlers (25) ein Stutzen (26) für einen Anfahrbrenner oder ein Stutzen (26) für die Zufuhr der durch einen externen Wärmeerzeuger bereitgestellten Prozeßgase vorgesehen ist.

10. Apparat nach Anspruch 1,
dadurch gekennzeichnet
daß die Eintrittsöffnungen (18) mit Einrichtungen zum Eintrag eines Hilfsbrennstoffes ausgerüstet sind.

11. Apparat nach Anspruch 1,
dadurch gekennzeichnet,
daß er ein Trockner für stückiges, körniges, faseriges oder pastöses Gut oder Reaktor zur Verbrennung von Klärschlamm ist.
